# EUROPEAN PATENT SPECIFICATION

(11) **EP 1 035 254 B1**
(45) Date of publication and mention of the grant of the patent: **04.06.2003**
(21) Application number: 00104402.3
(22) Date of filing: 02.03.2000
(51) Int. Cl.: D21H 19/84, B32B 31/12, B44C 5/04

(54) **Method for two sided sheet treating**
Verfahren zum beiderseitigen Behandeln eines Blattes
Méthode pour traiter les deux côtés d'une feuille

(30) Priority: 12.03.1999 US 267180
(43) Date of publication of application: 13.09.2000
(73) Proprietor: Premark RWP Holdings, Inc., Wilmington, Delaware 19801 (US)
(72) Inventor: Williams, Joel Lane, Troy, Texas 76579 (US); Soudelier, Earl, Gatesville, Texas 76528 (US); Marshall, Donald M., Temple, Texas 76504 (US); Mafoti, Robson, Temple, Texas 76501 (US)
(74) Representative: Patry, Didier Marcel Pierre

(56) References cited:
- EP-A- 0 511 129
- WO-A-94/12347
- US-A- 4 510 199
- US-A- 4 533 600

## Description

The present invention relates generally to the manufacture of laminated products such as may be used for decorative flooring, counter and table tops, and wall panels, and more specifically to a method for manufacturing such products by applying a coating of the same or different materials on opposing sides of a laminate material.

The ability to replicate natural materials has substantially improved over the years. For example, decorative laminates have replaced natural materials in the construction of furniture, cabinets, counter tops and other surfaces. In each of these applications, a decorative surface may be applied to a core layer or substrate, namely, plywood, particle board, chipboard, medium density fiberboard, etc. Often, a backing layer is secured to the opposite side ofthe substrate to balance the laminates or provide other benefits.

Generally, the decorative surface and the backing layer will include one or more kraft paper layers which are adhesively laminated together using various materials, such as melamine formaldehyde and phenolic resins. For example, a high pressure decorative laminate may comprise a very thin overlay sheet impregnated with melamine resin and having aluminum oxide grit to provide for abrasion resistance, a decorative sheet disposed thereunder, and several sheets of kraft paper impregnated with phenolic resin disposed below the decorative sheet.

Typically, in prior art systems, sheets of kraft paper are impregnated with phenolic resin by submerging them in a vat which is filled with phenolic resin and then curing the phenolic resin impregnated kraft paper. The kraft paper soaks up a desired amount of phenolic resin based on the time it is left in the vat and the level of submergence. This method of impregnating the kraft paper is generally not cost effective as it requires large vats providing substantial resin pool surface areas in order to allow the proper immersion of a portion of a continuous roll of kraft paper. These large pool surface areas result in wasteful use of phenolic resin as the large vat surface area is prone to collection of contaminants and to the escaping of resin vapors thus causing variations in the percentage of solids and/or other controlled attributes of the resin requiring substantial portions of the resin to be disposed of from time to time. Moreover, when the resin impregnated kraft paper is being manufactured using such vats, fumes are created during the process which are harmful to the workers in the vicinity of the manufacturing process. All of this is compounded by the fact that such vats of phenolic resin, or other resins, are difficult to clean requiring an inordinate amount of time to properly clean the vats that have been used for impregnating the kraft sheets with phenolic resin.

Conventional laminates are produced by applying heat and pressure to an assembly of laminate material, which typically comprises a plurality of phenol formaldehyde resin impregnated kraft paper sheets, a melamine formaldehyde resin impregnated decorative sheet, and optionally a melamine formaldehyde resin impregnated overlay sheet in a multi-opening press at high temperature and pressure. The different layers or sheets will be mechanically bonded due to the crosslink between the resins caused by the heat and pressure.

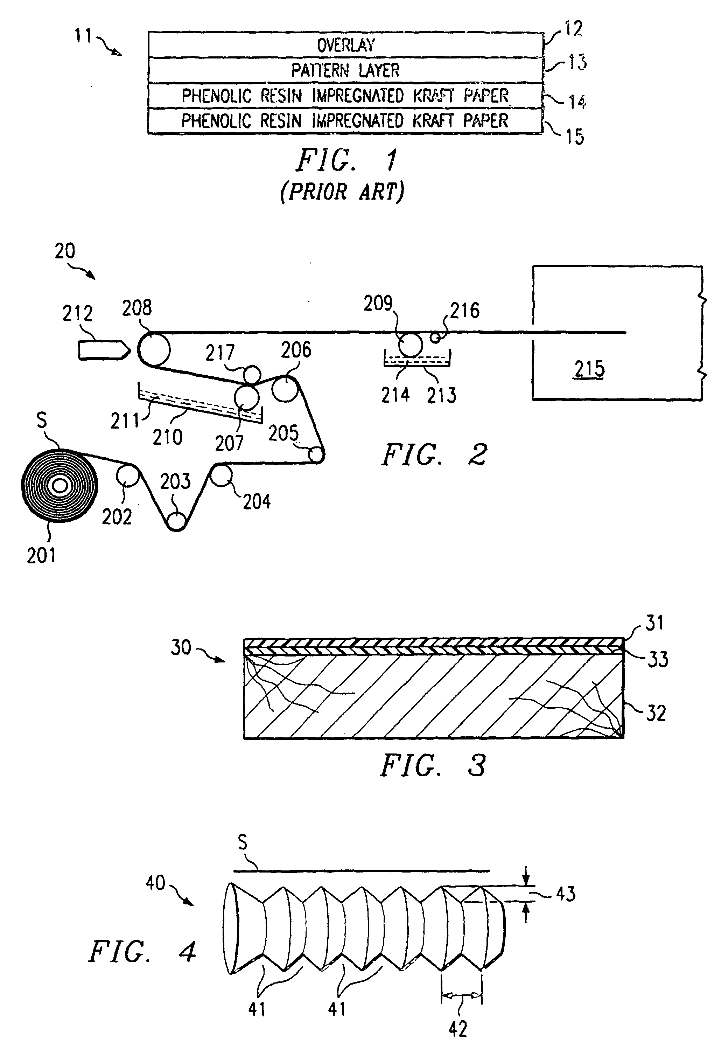

The laminates which are manufactured by using the kraft paper sheets as described above are made by a bulky manufacturing press which is expensive to operate. Thus, it is not cost effective or desirable to use the press to produce individual laminates. Therefore, in the typical manufacturing process a plurality of laminates are produced from each press during each press cycle to make the most efficient use of the press. As shown in FIGURE 1, each laminate assembly 11 may commonly comprise of a melamine overlay layer 12 incorporating AlO₂ for wear resistance, a pattern layer 13, and two layers 14 and 15 of phenolic resin impregnated kraft paper.

Typically, in such a press system pairs of such laminate assemblies are positioned back-to-back with the phenolic resin impregnated kraft paper sheet 15 of one laminate assembly facing the phenolic resin impregnated kraft paper sheet of a second laminate assembly. Pairs of laminate assemblies are separated from the other by metal sheets or press plates. However, when the laminate assemblies are pressed together, the different laminate assemblies would stick together if not provided with a release mechanism because the phenolic resins impregnated in the back-to-back kraft paper sheets of the two laminate assemblies would cross link to provide a mechanical bond between the sheets.

Therefore, typically during the manufacturing process each laminate assembly 11 also includes a sheet, known as release sheet. The release sheet is usually kraft paper which has been coated with a release agent on at least one side. This release sheet is placed at the end of each laminate assembly adjacent to the phenolic resin impregnated kraft paper layer 15 away from the press plates to provide a release mechanism between the paired laminate assemblies. The release sheet facilitates easy separation of the laminate assemblies after pressing as the release agent will not allow cross linking of the laminate assemblies at least with respect to the side of the laminate assembly to which the release sheet is applied.

Typically due to the heat and pressure applied during the pressing process the release sheet sticks to the phenolic resin impregnated kraft paper layer disposed on a side of the release sheet not treated with the release agent as the phenolic resin in this sheet will migrate under heat and pressure into at least a portion of the release sheet to provide structural cross linking. Accordingly, the release sheet generally adds to the thickness or bulk of the laminate. However, due to the presence of the release agent on the other side of the release sheet, the pressed laminate assemblies may then be separated from each other and the side of the kraft paper with the release sheet is sanded to remove the release agent from the surface of the release sheet.

The use of the release sheet during pressing of laminate assemblies as described above and the subsequent sanding of the release agent coated surface presents certain disadvantages. In order to achieve the desired thickness of the laminate assembly and still allow the use of a discrete release sheet to facilitate separation of the laminate assemblies, more sheets of thinner material instead of fewer sheets of thicker material have to be used. This increases the manufacturing overhead as a greater number of sheets have to be handled and processed before they can be used in the laminate assembly. Such handling and processing may include impregnating the sheets with phenolic resin, cutting the sheets to the desired size, and collating the sheets for subsequent pressing. Also, the release sheet itself has to be coated with a release agent, cut to the desired size and collated with the other sheets.

Furthermore, since the release sheet becomes part of the laminate after pressing, at least one sheet of the laminate does not include phenolic resin saturation, but rather relies on migration of the resin from an adjoining sheet. Thus, prior art systems do not provide consistent structural bonding between the different layers of the laminate. Moreover, in order to remove all the release agent from the laminate assembly, it might be necessary to sand more than just the surface of the release sheet. Thus, laminate assemblies obtained by this process may not have a consistent thickness from one laminate assembly to another and also cause wastage of material.

The conventional laminates produced by the above described prior art systems may then be cut to size and employed in a variety of applications such as decorative surfaces for desktops, tabletops, wall panels, and the like such as by bonding them to a core layer or substrate with a conventional adhesive such as contact cement. These laminates may also be used as backer layers common in laminated flooring products.

It should be clear that the use of the release sheet contributes substantially to the cost of the manufactured laminate and also adds to the product cycle time. Not only are there raw material costs involved with the use of a separate release sheet, but also substantial undesirable processing costs are inherent with the use of the release sheets.

Document WO 94 12347 discloses a steam and gas penetrable film comprising a paper having three separate components: an impregnating resin that penetrates throughout the paper; a layer of glue on one side of the resin impregnated paper; and a fully cured lacquer or varnish layer on the other side of the resin impregnated paper. After impregnating the paper with resin, the paper is passed through a glue bath to put a glue layer on one side and a lacquer bath to put a lacquer layer on the other side.

Document US 4 510 199 discloses the use of a release sheet for laminates that is impregnated with resin by immersing/dipping the sheet in resin. After immersion in resin, the sheet is then coated on one side with a wax-alginate salt release layer.

Document US 4 533 600 is directed to a low cost sealant sheet material for sealant and wet adhesive casting operations having a coating of a single elastomer modified polyvinyl chloride applied to both surfaces of highly calendared kraft paper followed by a release coating applied to both surfaces over the top of the resin composition.

Document EP 0 511 129 is directed to a method of making a flat support with an anti-skid substance on one face and an adhesive on the other face.

Thus, there is a need in the art for a method of manufacturing laminates using the advantages offered by bulk pressing the laminates without introducing unnecessary costs, handling steps, or structural disadvantages attendant with the use of prior art release sheets.

These and other objects, features and technical advantages are achieved by a method according to claim 1.

Accordingly, in a preferred embodiment of the present invention, one side of a kraft paper or other laminate material used in constructing a laminated product is coated with a substance having a particular characteristic desirable during the manufacturing process although such a characteristic may not be particularly desirable in the finished laminated product. For example, it is often desirable that a side of the kraft paper which comes in contact with another laminate assembly during the manufacturing process be coated with a release agent. For example, sodium alginate which exhibits superior release or crosslink avoiding properties when disposed between laminate materials having phenolic resin thereon, may be used as a release agent during the manufacturing process of decorative laminates and therefore may be provided as a coating on the kraft paper.

According to this embodiment of the invention, another side of the kraft paper is coated with a substance having characteristics desirable in the end product. For example, with decorative laminates it may be desirable to coat an opposing side of the kraft paper with phenolic resin in order to provide desired mechanical bonding with additional layers of kraft paper or other laminate material.

Although described above with respect to the use of sodium alginate as a release agent, it should be appreciated that any release agent may be used.

Preferably, reverse roll coating in which a roll of paper is unwound and passed over a series of rollers such that one side of the paper is treated with a substance having characteristics desirable in the manufacturing process and the other side is treated with a substance having characteristics desirable in the end product, is used to provide precisely controlled application ofdesired materials to the laminate material. However, although reverse roll coating is used in a preferred embodiment, any process suitable for precisely treating different surfaces of a laminate material may be used according to the present invention.

The present invention provides advantages not available in the prior art. For example, the laminate material so treated serves the function of a release sheet in a laminate assembly, eliminating the need for a separate release sheet during the manufacture of laminates. Thus, after the laminate assemblies have been cured under high pressure and heat, the cured laminate assemblies may be easily separated. The release agent may then be removed from each laminate assembly, such as by sanding, and the laminate assembly used in an end product. Thus, the overhead associated with the raw material costs, handling, and coating of the release sheets is eliminated while providing desired attributes in the laminated assembly. For example, the preferred embodiment wherein phenolic resin is provided on a side of this sheet results in a final sheet in the laminate assembly having structural attributes consistent with those of the other laminate materials of the laminate assembly due to this sheet utilized for providing the release functionality also having the phenolic resin.

Additionally, since the release sheet which added to the thickness of the laminate is no longer used, the total number of laminate materials used may be further reduced by combining fewer laminate materials of increased thickness to achieve the desired thickness of the laminate. For example, a prior art laminate may be required to use thinner sheets of laminate material to produce a laminate of the desired thickness as these sheets are typically provided in particular thicknesses which, when divided to provide a desired total thickness from multiple sheets, one of which being the needed discrete release sheet, dictate that a particular number of sheets be used. However, the present invention would allow thicker sheets of laminate material to be used instead as there is no need for a discrete release sheet to be accounted for in the total thickness of the laminate assembly and therefore sheets having a greater thickness may be utilized to provide the desired total laminate assembly thickness. Furthermore, the thicker sheets themselves may be less expensive than the thinner sheets since fewer sheets have to be handled at the plant where these sheets are manufactured. Also, the thicker sheets are easier to handle than the thinner sheets, and are less easily torn, thus reducing wastage due to scrap during handling. Furthermore, fewer sheets are now required to be cut to the desired size and there is less handling and lay up costs at the laminate manufacturing plant. The present invention also provides more control of the final thickness of the laminate since the thickness of the laminate materials used may now be selected without concern for the thickness of a release sheet which must be accounted for in the total thickness of the laminate assembly but which cannot be relied upon for providing the mechanical integrity of the sheets treated to provide the above mentioned cross linking.

Therefore, it is an object of the present invention to provide a method for coating a sheet with different materials on two different surfaces of the sheet.

It is another object of the present invention to coat one surface of a sheet with a material to provide characteristics desirable in the manufacturing process to reduce the cost of the end product.

It is a further object of the present invention to coat another surface of the sheet with a bonding agent.

It is a further object of the present invention to provide a single sheet with a characteristic desirable in the manufacturing process and a characteristic that is desirable in the end product thereby providing both benefits in a single sheet and at the same time reducing costs associated with wastage and handling of the sheets.

It is a further object of the invention to provide a laminate assembly for the manufacture of a laminate end product, the laminate assembly comprising at least one release sheet, the release sheet comprising a kraft paper, wherein the release sheet comprises: a first surface coated with a first substance comprising a release agent; and a second surface coated with a second substance comprising a bonding agent, wherein the first substance is disposed substantially on the first surface of the release sheet and wherein the release sheet serves as a constituent layer of the laminate end product.

It is a still further object of the present invention to provide a method for two sided coating a kraft paper such that one side is coated with a release agent and the other side is coated with phenolic resin thereby eliminating the need to use release sheets in the manufacture of a laminate to provide a more cost efficient manufacturing process.

It is a still further object of the present invention to reduce the cost of producing laminates and also to reduce the production cycle by eliminating unnecessary steps from the manufacturing process of the prior art.

It is a still further object of the present invention to provide a method for manufacturing laminates comprising the steps of:
providing a first laminate assembly, said laminate assembly comprising an outermost layer, said outermost layer comprising a first release sheet, said first release sheet having a first surface coated with a first substance comprising a release agent, said first release sheet having a second surface coated with a second substance comprising a bonding agent, said second surface facing an inner layer of said first laminate assembly;
said method being characterized in that it further includes the steps of:
   providing a second laminate assembly, said second laminate assembly comprising an outermost layer, said outermost layer comprising a second release sheet, said second release sheet having a first surface coated with a first substance comprising a release agent, said second release sheet having a second surface coated with a second substance comprising a bonding agent, said second surface facing an inner layer of said second laminate assembly;
   positioning said first and second laminate assemblies back to back to each other such that said first surfaces of said first and second release sheets oppose each other;
   curing said pair of laminate assemblies under high pressure and heat; and
   separating the first surfaces of the first and second release sheets of the pair of cured laminate assemblies from each other, said first and second release sheets each being prepared by the two following steps in any order:
      (1) coating the first surface of each release sheet with the first substance; and
      (2) coating the second surface of each release sheet with the second substance wherein said first substance is disposed substantially on said first surface of said release sheet, and wherein during curing, said second surface of each release sheet bonds to the inner layer of its respective laminate assembly and each said release sheet becomes a constituent layer of its respective cured laminate assembly.

The foregoing has outlined rather broadly the features and technical advantages of the present invention in order that the detailed description of the invention that follows may be better understood.

For a more complete understanding of the present invention, and the advantages thereof, reference is now made to the following descriptions taken in conjunction with the accompanying drawings, in which:
FIGURE 1 shows a schematic of a laminate assembly with the different layers of laminate material;
FIGURE 2 shows a system for reverse roll coating a sheet with two substances on different surfaces of the sheet;
FIGURE 3 shows a schematic of a sheet that has been coated on both sides; and
FIGURE 4 shows a schematic of a metering device.

FIGURE 2 shows a preferred system 20 for applying substances to opposing surfaces of a sheet S. The system comprises, a sheet S in the form of a roll 201, a series of rollers 202, 203, 204, 205, 206, 207, 208, 209, and 217, two pans 210, 213, metering devices 212, 216 and a curing device 215 such as may be an oven for applying a controlled amount of heat for subsequent curing of a coating substance. Pans 210 and 213 contain substances 211 and 214, respectively. Substances 211 and 214 may be the same substance or they may be different substances that are applied on different surfaces of sheet S. Metering devices 212 and 216 control the amount of substance 211 and substance 214, respectively, remaining on sheet S.

Sheet S is unwound and passed along rollers 202, 203, 204, 205, 206, 207, 208, 209 and 217 to curing device 215. Rollers 207 and 209 are coating rollers adapted to rotate within pans 210 and 213. Coating roller 207 which is adapted to be partly or totally submerged in substance 211 contained in pan 210 may be used to coat one side of sheet S. Similarly, coating roller 209 which may be adapted to be partly or totally submerged in substance 214 contained in pan 213 may be used to coat the other side of sheet S. Rollers 202, 203, 204, 205, 206 maintain a uniform tension on the surface of sheet S and prevent it from slacking and/or tearing. The tension on sheet S may be varied by adjusting the speed of the rollers and/or the pressure exerted thereon by idle rollers 202, 203, 204, 205, and/or 206. Furthermore, although a series of rollers 202, 203, 204, 205, 206, 207, 208, 209 and 217 are shown in the preferred embodiment, the operation of the present invention does not require that all these rollers be used. For example, only select ones of these rollers may be provided depending on the desired tension and pressure to be applied on sheet S.

Substance 211 is fed into pan 210 by means of a pump (not shown). The level of substance 211 in pan 210 may be controlled by the pump such that the pump automatically feeds more substance 211 to pan 210 whenever substance 211 falls below a certain level. Roller 207 may be submerged in substance 211 up to a desired level depending on the amount of substance 211 needed to coat one side of sheet S. Moreover, the desired amount of substance 211 to be coated on one side of sheet S may also be controlled by the pump. Thus, when coating roller 207 rotates in pan 210, the surface of roller 207 is coated with substance 211 and when the first surface of sheet S comes in contact with roller 207, roller 207 coats the first surface of sheet S with the desired amount of substance 211. Moreover, by varying the speed of the rollers the amount of time that different parts of sheet S remain in contact with roller 207 may be controlled, thus, further controlling the amount of substance 211 that is applied to different parts of sheet S. Similarly, by increasing/decreasing the pressure at which sheet S engages roller 207, the amount of substance 211 that is applied may be varied. This pressure may be adjusted, for example, by adjustment to the aforementioned tension of sheet S.

Furthermore, as shown in FIGURE 2, sheet S passes between coating roll 207 and roller 217 such that one surface of sheet S is in contact with roller 207 and the other surface is in contact with roller 217. Roller 217 may be used to apply pressure on sheet S, to ensure that sheet S touches coating roller 207. Since the position of roller 217 is adjustable it may be used to control the amount of substance 211 to be coated on sheet S. Roller 217 may also be used to apply pressure on sheet S such that substance 211 penetrates sheet S upto a desired level. Also, if desired, the position of roller 217 may be adjusted such that it does not apply any pressure on sheet S and thus sheet S may totally bypass substance 211. That is, by adjusting the position of roller 217, one surface of sheet S may be left uncoated.

Although described in the preferred embodiment as sheet S coming into contact with roller 207, it should be appreciated that operation of the present invention does not require such contact. For example, roller 207 may be adapted to transfer coating material without contact to sheet S, such as through the use of rotational speeds sufficient to eject coating material onto the surface of sheet S. Additionally or alternatively, non-roller coating techniques may be used, such as the use of spray nozzles, brush bristles, or the like.

In the preferred embodiment illustrated, sheet S passes around roller 208 which is positioned after roller 207 and changes the orientation of sheet S such that the second side of sheet S touches coating roller 209. Metering device 212 preferably located near roller 208 in order to take advantage of the disposition of the surface of sheet S provided thereby, may be used to further control the amount of substance 211 remaining on sheet S. Thus, once sheet S has been coated on one side, the amount of substance 211 remaining on sheet S may be further and precisely controlled to maintain a desirable amount of the substance on the surface of sheet S. Thus, if desired, metering device 212 may be adjusted, such as by being moved towards roller 208, thereby reducing the amount of substance 211 remaining on sheet S. The excess of substance 211 that is removed from sheet S is caught in pan 210. On the other hand, if desired, the amount of substance 211 remaining on sheet S may be increased by adjusting metering device 212, such as by increasing the distance of metering device 212 from roller 208. Furthermore, metering device 212 may be used to achieve a desired penetration of substance 211 into sheet S, such as by adjusting device 212 to apply pressure to the sheet surface.

According to the illustrated embodiment, sheet S is made to pass over coating roller 209 such that the second surface of sheet S touches coating roller 209. Coating roller 209 is located such that, if desired, it may be submerged partially or totally in substance 214 contained in pan 213. Substance 214 is fed into pan 213 by means of a pump (not shown). The level of substance 214 in pan 213 may be controlled by the pump, such that when coating roller 209 rotates in pan 213, the surface of roller 209 is coated with a desired amount of substance 214. Thus, when the second surface of sheet S comes in contact with roll 209, roll 209 coats the second surface of sheet S. Moreover, by varying the speed of the rollers the amount of time that sheet S remains in contact with roller 209 may be controlled, thus, controlling the amount of substance 214 that is applied to sheet S. The speed of the rollers may also be controlled to apply a desired pressure on the second surface of sheet S by roller 209 to achieve a desired penetration level for substance 214. As with roller 207 described above, there is no limitation to the use of contact between roller 209 and sheet S in coating the second surface of sheet S. Additionally, also as described above with respect to roller 207, coating of the second surface may utilize non-roller techniques.

A second metering device 216 is preferably provided in close proximity to coating roller 209 to precisely control the amount of substance 214 remaining on the second side of sheet S. Therefore, if desired, sheet S may be passed over metering device 216 such that the second surface of sheet S touches metering device 216. Although shown in the preferred embodiment of FIGURE 2 as a different embodiment than metering device 212, metering device 212 and 216 may similar mechanisms, if desired. Additionally, metering device 216 may be disposed near a reverse roller, as is metering device 212, disposed after coating roller 209 and/or metering device 212 may be disposed at a location other than near a reverse roller, if desired.

Sheet S is then preferably subjected to a B-curing process or other conditioning step to preferably condition substances 211 and 214, such as by drying or curing. For this purpose, sheet S may be passed through a conditioner 215. The environment inside conditioner 215 may be controlled such that, if desired, different temperatures, pressures, catalysts, or the like may be maintained on opposite sides of sheet S or at different points within conditioner 215, to facilitate efficient curing of substances 211 and 214. Since substances 211 and 214 may be different substances, it is desirable to control the environment inside conditioner 215 such that substance 211 and substance 214 are cured based on their respective desired characteristics. For this purpose, different heating elements, for example, may be provided in different parts of conditioner 215 such that one part of conditioner 215 is more suitable for curing substance 211 and another part of conditioner 215 is more suitable for curing substance 214. When a release agent such as sodium alginate is used as substance 211, it may be desirable to keep the sodium alginate on the surface of sheet S and thus it may be desirable to cure sodium alginate more rapidly such as by exposing the sodium alginate to a higher temperature initially. Accordingly, different heating elements may be provided on different sides of sheet S to heat the two surfaces differently. For example, a cooling surface may be provided on the first side and a heating surface may be provided on the second side.

Furthermore, if desired an optimum temperature or other conditioning attribute, which when applied in combination with the precisely controlled application of each coating material according to the present invention, may be calculated such that both substance 211 and substance 214 are cured to an acceptable degree. The acceptable degree of curing may be determined based on the ultimate use of sheet S. For example, it might be acceptable to cure substance 211 on the first side of sheet S to a lesser degree in order to obtain a better curing of substance 214 applied to the second side of sheet S depending on the particular application.

Although, conditioner 215 has been described as a single apparatus, a series of apparatus may be used to achieve the desired curing of the substances, if desired. For example, the series of apparatus may be a combination of conditioners, refrigerators, wetting devices, drying devices etc. Moreover, it may be desirable to control a combination of conditions, such as the temperature, the pressure, moisture level, etc., inside the conditioner to achieve a desired result, such as a desired penetration level of sheet S by either or both of substances 211 and 214.

In the preferred embodiment, sheet S is a laminate material, such as kraft paper, that is used in the manufacture of laminates, such as decorative laminates and/or backer layers. Furthermore, although sheet S is preferably wound in the form of a roll, for purposes of this invention it is not necessary that the sheet be so wound.

As noted, substance 211 may be any suitable release agent. During the process of manufacturing laminates, it is desirable that the outermost layer of each laminate assembly be coated with a release agent on one side, i.e., the side facing the other laminate assembly so that the laminate assemblies do not bond with each other during curing under high pressure and temperature, thus eliminating the need to use a release sheet during manufacturing. A commonly used release agent is a sodium alginate, such as kelgin, manufactured by Monsanto Company, which has been found to provide superior release or cross link avoiding properties. However, any release agent may be used without departing from the scope of the present invention. Furthermore, other materials providing characteristics desirable during the manufacturing phase, such as lubricants, wetting agents, drying agents may be used as substance 211 without departing from the scope of the present invention.

Similarly, substance 214 may be any suitable bonding agent. In a laminate it is often desirable that the layers of a laminate assembly be coated with phenolic resin to provide structural bonding with other laminate materials. Thus, in the above example sheet S is coated on one side with a release agent and on the other side with phenolic resin.

Metering device 212 may be any device capable of precisely controlling the amount of substance 211 that remains on the first side of sheet S. In the preferred embodiment, metering device 212 is an air knife which is used to manipulate the coating on the first side of sheet S, i.e. to precisely control the amount of coating material remaining on the surface by removing excess coating of substance 211 from the first surface of sheet S. Thus, in the preferred embodiment, metering device 212 comprises a sheet of air projected under pressure at an angle from a slot-shaped air nozzle onto the coated surface of sheet S. Thus, while sheet S is supported on a moving support such as reverse roller 208, the sheet of air is projected onto sheet S so that the air strikes sheet S at an angle such that a desired amount of substance 211 may be removed from sheet S.

The amount of substance 211 remaining on sheet S may be adjusted by controlling how much air is blown across the surface of sheet S, the force of the air blown across the surface of sheet S, the angle at which the sheet of air strikes the surface of sheet S, and/or the time during which the air knife engages the surface of sheet S, i.e. the speed at which the sheet is moved past the air knife and/or the time transpiring between the application of the coating substances and the engaging of the air knife. For example, by increasing the distance of metering device 212 from roller 208 the amount of substance 211 remaining on the first side of sheet S may be increased due to the striking force of the sheet of air of the preferred embodiment air knife, against the surface of sheet S being reduced. Accordingly, the preferred embodiment includes, a set of screw adjusters which are provided at the end of metering device 212 to adjust its distance from sheet S. However, any means may be used to adjust the distance of the metering device from the surface of sheet S, e.g., a pneumatic mechanical adjuster, an eccentric and follower, an electrically powered adjusting means such as a computer controlled servo mechanism, etc. Furthermore, the air pressure applied by the preferred embodiment metering device 212 may be adjusted to control the amount of substance 211 that penetrates sheet S at a particular advance speed of sheet S through the coating apparatus. For example, when a release agent is coated on the first side of sheet S, it is desirable that the release agent stay substantially on the surface of the sheet to facilitate its easy removal by sanding. Thus, by controlling the air pressure applied by metering device 212, such that the pressure is between 0.25 psi and 5 psi at an advance rate of 5-300 ft/min for sheet S, the sodium alginate release agent of a preferred embodiment may be maintained substantially on the surface of the sheet.

Metering device 216 of the preferred embodiment illustrated in FIGURE 2 is in the form of a bar or rod 40 shown in FIGURE 4, that drags on the surface of sheet S. Grooves 41 may be provided on metering device 40 such that when sheet S passes over rod 40, some amount of substance 214 may be removed from sheet S. By changing the spacing 42 of the grooves 41 on the metering device, the amount of substance 214 remaining on sheet S may be controlled. For example, when the metering device has no grooves and is substantially smooth, a large amount of substance 214 may be removed from sheet S. On the other hand, by providing grooves on metering device 216 and selecting their size 43 and spacing 42, the amount of substance 214 removed from sheet S may be decreased. Although, metering device 216 (of FIGURE 2) described above has been discussed with respect to a rod with grooves, any device capable of producing the desired precise control of coating material may be used for this purpose.

It is desirable that the release agent stay mostly on the surface of the kraft paper. Therefore, metering device 212 is preferably an air knife because an air knife has been found to provide far superior accuracy as compared to other metering devices, such as the above described bar with grooves. On the other hand, it is desirable that the preferred embodiment phenolic resin penetrate sheet S such that sheet S is substantially impregnated with the phenol formaldehyde resin while not saturating the sheet to a point that the second substance is contaminated, repelled, or otherwise adversely affected. Therefore, metering device 216 is preferably a bar with grooves as the grooved bar also facilitates impregnating sheet S with phenolic resin upto the desired level.

As mentioned above, the speed of the rollers or other mechanism for controlling the throughput of sheet S may be controlled to coat the sheet with a desired amount of substances 211 and 214. In the preferred embodiment, the rollers rotate between 5-300 ft/min so that the desired amounts of substances 211 and 214 may be applied to the sheet.

Furthermore, due to the application of substance 211 on the first surface of sheet S, sheet S might curl or otherwise be physically altered before it is coated with substance 214 on the second surface. Therefore, the speed of the rollers may have to be further controlled in order to prevent undesired interaction of such physical alterations of sheet S. Metering device 216 may also be utilized to help prevent undesired interactions of these physical alterations, such as the aforementioned curling, by controlling the amount of substance 214 that remains on the second surface of sheet S.

It is desirable that the same amount of release agent be applied on the entire surface of sheet S to provide a uniform coating of the substance, such as the preferred embodiment release agent. Thus, coating roller 207 has to be uniformly coated with substance 211, and therefore the level of substance 211 in pan 210 is preferably precisely controlled to provide a consistent delivery of coating substance along a run of sheet S. In the preferred embodiment, the amount of sodium alginate applied on the surface of sheet S is between 0.5-5 grams per square foot depending on the particular application.

However, it is not desirable that the phenolic resin that is absorbed by sheet S from the second side penetrate the first side of sheet S. In general, the amount of the second applied substance 214 absorbed by sheet S is dependent to at least a certain extent on the amount of the first applied substance 211 absorbed. Therefore, in the preferred embodiment, the release agent is coated to the surface of sheet S before the phenolic resin as the release agent is controlled according to the present invention to remain substantially on the surface of the sheet and, therefore, limits its interaction with the application of the second substance. Thus, to avoid the release agent from being repelled by the phenolic resin, in the preferred embodiment the release agent is applied to sheet S before the phenolic resin. However, it is not necessary that the release agent be applied first, and phenolic resin may be applied before the release agent without departing from the scope of the present invention.

Furthermore, the level of penetration of substances 211 and 214 and the saturation level of sheet S may be controlled by controlling various parameters inside conditioner 215. Thus, it may be desirable to determine a desired curing cycle for curing sheet S to obtain the necessary saturation level of each substance. For example, in order to achieve the desired curing, sheet S may be passed through different stages of curing so that stage one provides an optimum environment for curing one substance, such as a substance most prone to undesired migration, and stage two provides an optimum environment for curing the other substance, such as a substance less likely to migrate.

In the preferred embodiment, the ratio of the release agent to the phenolic resin is approximately 1:2. However, this ratio may be varied depending on the end use of the laminate. For example, when the laminate is used as a counter top, the ratio may be different than when the laminate is used as a flooring panel or as a backer layer. Moreover, the amount of release agent may be between 1-15 % and the amount of phenolic resin may be between 15-30%.

FIGURE 3 shows a schematic of a sheet that has been coated on both sides with different substances. Substance 31 is coated on one side of sheet 30 as shown so that substance 31 remains substantially on the surface of sheet 30. Sheet 30 is coated on an opposing surface with substance 32 which penetrates sheet 30 upto a desired level 33 as shown.

In order to adjust system 20 to the desired settings to enable coating the surfaces in the proper ratio according to a preferred embodiment, the bone dry weight of sheet S is first determined. One side of sheet S is then coated with substance 211 and metering device 212 and conditioner 215 adjusted until the system is capable of curing substance 211 to a desired level such as a desired percentage weight of substance 211 as determined from a comparison of the coated weight of sheet S and the bone dry weight of sheet S. Sheet S is then treated only on the second side with substance 214 and metering device 216 and conditioner 215 adjusted until the system is capable of curing substance 214 to the desired ratio again as a desired percentage weight of substance 214 as determined from a comparison of the coated weight of sheet S and the bone dry weight of sheet S. Furthermore, in addition to the metering devices and environment inside conditioner 215, the speed of the throughput of sheet S, the amount of substances deposited initially on the surface of sheet S and other operational conditions may be precisely controlled to achieve the desired result.

A monitoring device, such as a density sensor, a camera, or other optical sensor, or even various contact sensor devices may be provided to monitor the amount of the different substances on sheet S and also to monitor the thickness of the sheet during manufacturing to provide a sheet with the desired thickness and characteristics. This monitoring device preferably monitors sheet S coming out of oven 215 periodically and provides information useful in controlling aspects of the coating and curing process.

Furthermore, system 20 may be adapted to include more than two pans and the system adjusted so that the same system may be used to coat sheet S with different substances when desired. For example, roller 203 may be used to coat a different substance on sheet S and roller 217 adjusted accordingly so that sheet S may be made to bypass substance 211. In the alternative, if desired, only two pans may be used but a draining means provided to drain one substance from one of the pans and fill the pan with a different substance by means of a pump when a new coating substance is to be applied.

It shall be appreciated that the two sided coating system and method as described in the preferred embodiment provides better release properties by precisely controlling the amount of the release agent and keeping it on the first surface, to allow the second substance to soak sheet S and therefore improving the release since more of the release agent is on the surface. Thus, it is easier to separate the laminate assemblies after pressing. Furthermore, in the preferred embodiment, by impregnating sheet S with a greater quantity of the phenolic resin, it is easier to make the release agent stay on the surface of sheet S, thus eliminating the need to sand more of the sheet than necessary to remove all of the release agent. This reduces the cost by eliminating undesired wastage of material. Moreover, the sheet providing the release properties is also providing the structural cross linking due to the preferred embodiment phenolic resin. Thus, better structural cross linking is provided as migration of phenolic resin from an adjoining sheet is not the sole source of the structural bonding of this sheet of the laminate assembly.

The invention as described eliminates the need to use a release sheet during the pressing of the laminate assemblies in the manufacturing phase of a laminate. Thus, substantial cost savings in terms of raw material costs, handling costs, wastage, etc. may be achieved by the present invention.

It is one object of the invention to provide a method for coating a sheet for use in the manufacture of an end product, this method comprising the steps of coating a first surface of said sheet with a first substance providing characteristics desirable in said manufacturing process, and coating a second surface of said sheet with a second substance providing characteristics desirable in said end product.

It is a further object of the invention to provide a method further comprising the step of unwinding a roll of said sheet and passing said unwound sheet along a plurality of rollers at least one of which is adapted to maintain a uniform tension of said sheet.

It is a further object of the invention to provide a method further comprising the step of controlling a speed of ones of said plurality of rollers to affect an amount of said first and second substances to be applied to said first and second surfaces of said sheet.

It is a further object of the invention to provide a method further comprising the step of storing said first substance in a first container and disposing a first coating roller to rotate within said first container such that said first coating roller is coated with a layer of said first substance.

It is a further object of the invention to provide a method further comprising the step of determining an amount of said first substance to be applied to said first surface of said sheet based on a desired saturation level of said sheet to allow a desired amount of said second substance to be absorbed by said sheet.

It is a further object of the invention to provide a method further comprising the step of controlling said amount of said first substance that is applied to said first surface of said sheet by positioning an engagement mechanism to provide a desired bias on said sheet such that said sheet engages said first coating roller with a selected amount of pressure.

It is a further object of the invention to provide a method further comprising the step of removing from said first surface of said sheet an amount of said first substance that is in excess of said determined amount.

It is a further object of the invention to provide a method further comprising the step of applying air pressure at a predetermined angle to said first surface of said sheet to maintain said first substance substantially on said first surface of said sheet.

It is a further object of the invention to provide a method further comprising the step of storing said second substance in a second container and disposing a second coating roller to rotate within said second container such that said second coating roller is coated with a layer of said second substance.

It is a further object of the invention to provide a method further comprising the step of determining an amount of said second substance to be applied to said second surface of said sheet to saturate said sheet with a desired amount of said second substance without causing undesired interaction with said first substance.

It is a further object of the invention to provide a method further comprising the step of applying pressure on said second surface of said sheet to achieve a desired penetration of said sheet by said second substance.

It is a further object of the invention to provide a method further comprising the step of removing from said second surface of said sheet an amount of said second substance that is in excess of said determined amount of said second substance to maintain a desired level of penetration of said sheet by said second substance.

It is a further object of the invention to provide a method further comprising the step of providing a metering device with a plurality of grooves of predetermined spacing to remove from said second surface of said sheet said amount of said second substance that is in excess of said determined amount.

It is a further object of the invention to provide a method further comprising the step of determining a first conditioning attribute for curing said first substance to maintain said first substance substantially on said first surface of said sheet without penetrating said sheet.

It is a further object of the invention to provide a method further comprising the step of determining a second conditioning attribute for curing said second substance to achieve a desired saturation level of said sheet.

It is a further object of the invention to provide a method further comprising the step of curing said first substance by providing said first conditioning attribute, and curing said second substance by providing said second conditioning attribute.

It is a further object of the invention to provide a method wherein said first and second conditioning attributes are provided by a curing device.

It is a further object of the invention to provide a method further comprising the step of curing said first and second substances by a curing device, wherein said curing device provides a third conditioning attribute selected to substantially achieve said maintaining of said first substance on said first surface and said desired saturation level of said second substance of said first and second conditioning attributes.

It is a further object of the invention to provide a method wherein said sheet is a kraft paper sheet.

It is a further object of the invention to provide a method wherein said first substance is a release agent, a lubricant, a wetting agent, or a drying agent.

It is a further object of the invention to provide a method wherein said first substance is a release agent, and wherein said release agent has superior release and crosslink avoiding property.

It is a further object of the invention to provide a method wherein said release agent is a fatty acid, a fatty acid salt, an amine, an amide or an ester.

It is a further object of the invention to provide a method wherein said release agent is sodium alginate.

It is a further object of the invention to provide a method wherein said second substance provides mechanical bonding with a second sheet of laminate assembly.

It is a further object of the invention to provide a method wherein said second substance is phenolic resin.

It is a further object of the invention to provide a method wherein said second substance is melamine formaldehyde, a PVA, an acrylic, a polyester, or a water based thermosetting resin.

It is a further object of the invention to provide a method wherein said end product is a laminate.

It is a further object of the invention to provide a method wherein said first substance is applied to said first surface before said second substance is applied to said second surface.

It is a further object of the invention to provide a method wherein said second substance is different from said first substance.

It is a further object of the invention to provide a method further comprising the step of controlling precisely the application of said first and second substances on said first and second surfaces of said sheet to maintain said first substance substantially on said first surface.

It is a further object of the invention to provide a method, further comprising the step of controlling precisely the application of said first and second substances on said first and second surfaces of said sheet to allow said second substance to penetrate up to a predetermined level in said sheet.

It is a further object of the invention to provide a method further comprising the step of controlling precisely the application of said first and second substances on said first and second surfaces of said sheet to saturate said sheet with said second substance upto a desired level.

It is a further object of the invention to provide a method for producing laminates, comprising the steps of coating a first surface of a first kraft paper with a release agent, and coating a second surface of said first kraft paper with a bonding agent.

It is a further object of the invention to provide a method wherein said bonding agent is phenolic resin.

It is a further object of the invention to provide a method wherein said bonding agent is melamine formaldehyde, a PVA, an acrylic, a polyester, or a water based thermosetting resin.

It is a further object of the invention to provide a method wherein said first coating step comprises the step of engaging said first kraft paper with a first coater to coat said first surface of said kraft paper with a controlled amount of said release agent.

It is a further object of the invention to provide a method wherein said first coating step further comprises the step of engaging said first kraft paper with a first metering device to remove from said first surface an amount of said release agent determined to leave a desired amount of said controlled amount of release agent on said first surface..

It is a further object of the invention to provide a method wherein said second coating step comprises the step of engaging said first kraft paper with a second coater to apply a controlled amount of said bonding agent to said second surface of said kraft paper.

It is a further object of the invention to provide a method wherein said second coating step further comprises the step of engaging said first kraft paper to a second metering device to remove from said second surface an amount of said bonding agent determined to provide a desired level of penetration of said kraft paper by said bonding agent from a remaining portion of said controlled amount of said bonding agent on said second surface.

It is a further object of the invention to provide a method further comprising the step of exposing said first kraft paper to a conditioning unit to condition said release agent and said bonding agent by providing conditioning attributes suitable for providing both said release agent and said bonding agent with desired attributes.

It is a further object of the invention to provide a method further comprising the step of adjusting a throughput rate of said kraft paper for proper application of said release agent and said bonding agent to said kraft paper.

It is a further object of the invention to provide a method wherein said adjusting step comprises the step of adjusting said throughput rate of said kraft paper to allow proper conditioning of said release agent and said bonding agent by said conditioning unit.

It is a further object of the invention to provide a method wherein said exposing step comprises the step of controlling a first conditioning attribute during said exposure to maintain said release agent substantially on said first surface of said kraft paper.

It is a further object of the invention to provide a method wherein said exposing step further comprises the step of controlling a second conditioning attribute during said exposure to prevent seepage of said bonding agent onto said first surface of said kraft paper.

It is a further object of the invention to provide a method wherein said exposing step comprises the step of controlling a rate at which said kraft paper is exposed to said conditioning unit, maintaining a conditioning attribute of said conditioning unit to prevent seepage of said bonding agent onto said first surface of said kraft paper and maintaining said release agent substantially on said first surface of said kraft paper.

It is a further object of the invention to provide a method wherein said conditioning unit is an oven, a refrigeration device, a wetting device, or a drying device.

It is a further object of the invention to provide a method further comprising the step of determining an amount of said release agent to be applied to said first surface of said first kraft paper to allow a desired amount of said bonding agent to be absorbed by said kraft paper.

It is a further object of the invention to provide a method further comprising the step of determining an amount of said bonding agent to be applied to said second surface of said first kraft paper to saturate at least a portion of said kraft paper without adversely affecting said release agent.

It is a further object of the invention to provide a method further comprising the step of determining a ratio of said release agent and said bonding agent to be applied to said first kraft paper to allow a suitable release of said first surface from another surface when processed and to prevent said bonding agent from seeping through to said first surface of said first kraft paper.

It is a further object of the invention to provide a method wherein said ratio of said release agent and said bonding agent to be applied to said first and second surfaces respectively of said first kraft paper is approximately 1:2.

It is a further object of the invention to provide a method further comprising the step of determining an amount of said release agent to be applied to said first kraft paper to provide a desired release property to said first kraft paper.

It is a further object of the invention to provide a method wherein said release agent is applied to said first surface before said bonding agent is applied to said second surface to prevent said bonding agent from penetrating said kraft paper beyond a desired level.

It is a further object of the invention to provide a system for double sided coating a sheet for use in the manufacture of an end product, comprising a first coater, wherein said first coater contains a first substance providing characteristics desirable in said manufacturing process, and wherein said first coater is adapted for coating a first surface of said sheet with said first substance, a first metering device adapted to remove a portion of said first substance from said first surface of said sheet to thereby provide a precisely controlled amount of said first substance on said first surface, a second coater containing a second substance providing characteristics desirable in said end product, and wherein said second coater is adapted for coating said second surface of said sheet with said second substance, a second metering device for removing a portion of said second substance from said second surface of said sheet to thereby provide a precisely controlled amount of said second substance on said second surface, and means for curing said coated sheet under controlled conditions to provide simultaneous curing of both said first substance and said second substance.

It is a further object of the invention to provide a system further comprising a first means for controlling an amount of said first substance that is applied to said first surface of said sheet by said first coater, wherein said first means for controlling is disposed in close proximity to said first coater.

It is a further object of the invention to provide a system wherein said first means for controlling is a pressure roller adapted to apply a desired pressure of 0-100 psi on said sheet to achieve a desired saturation level for said sheet.

It is a further object of the invention to provide a system further comprising a second means for controlling an amount of said second substance that is applied to said second surface of said sheet by said second coater, wherein said second means for controlling is disposed in close proximity to said second coater.

It is a further object of the invention to provide a system wherein said second means for controlling is a roller adapted to apply a pressure of approximately 0-100 psi on said sheet to achieve a saturation level of 15-30%.

It is a further object of the invention to provide a system wherein said first coater is a roller rotating at 5-300 ft/min to coat said first surface of said sheet with a desired amount of said first substance.

It is a further object of the invention to provide a system wherein said first coater is a spray nozzle adapted to coat said first surface of said sheet with 1-20 grams/square foot of said first substance.

It is a further object of the invention to provide a system wherein said first metering device is an air knife, wherein said air knife applies pressure at 0.25-5 psi at an advance rate between 5-300 ft/min of said sheet to maintain said first substance substantially on said first surface of said sheet.

It is a further object of the invention to provide a system wherein said first metering device is a scraper with grooves, wherein a size of the grooves is approximately 0.5-40 gauge and a spacing of the grooves is approximately 0.035" to 0.118".

It is a further object of the invention to provide a system wherein said second coater is a roller rotating at 5-300 ft/min to coat said; second surface of said sheet with a desired amount of said second substance.

It is a further object of the invention to provide a system wherein said second coater is a spray nozzle adapted to coat said second surface of said sheet with 1-20 grams/square foot of said second substance.

It is a further object of the invention to provide a system wherein said second metering means is an air knife, wherein said air knife applies pressure at 0.25-5 psi at an advance rate between 5-300 ft/min of said sheet to achieve a penetration level of 15-30% of said second substance of said sheet.

It is a further object of the invention to provide a system wherein said second metering means is a scraper with 9-28 grooves/inch, wherein a size of the grooves is approximately 15-40 gauge and a spacing of the grooves is approximately 0.035"-0.118".

It is a further object of the invention to provide a system wherein said means for curing is an oven, wherein a temperature inside said oven is approximately 250°F to 350°F to achieve a desired curing of said first and second substances.

It is a further object of the invention to provide a system wherein said means for curing is a series of ovens with temperatures progressing in 3-5 stages from 250°F to 350°F to achieve a desired curing.

It is a further object of the invention to provide a system wherein said sheet is a kraft paper sheet.

It is a further object of the invention to provide a system wherein said first substance is a release agent, a lubricant, a wetting agent or a drying agent.

It is a further object of the invention to provide a system wherein said first substance is a release agent.

It is a further object of the invention to provide a system wherein said release agent is a fatty acid, a fatty acid salt, an amine, an amide and an ester.

It is a further object of the invention to provide a system wherein said release agent is sodium alginate.

It is a further object of the invention to provide a system wherein said second substance is a bonding agent.

It is a further object of the invention to provide a system wherein said bonding agent is phenolic resin.

It is a further object of the invention to provide a system wherein said second substance is melamine formaldehyde, a PVA, an acrylic, a polyester, and a water based thermosetting resin.

It is a further object of the invention to provide a system wherein said end product is a laminate.

It is a further object of the invention to provide a system further comprising means for controlling a first curing attribute inside said means for curing to maintain said first substance substantially on said first surface of said sheet.

It is a further object of the invention to provide a system further comprising means for controlling a second curing attribute inside said means for curing to prevent said second substance from seeping through to said first surface of said sheet.

It is a further object of the invention to provide a system wherein said second substance is applied to said second surface after said first substance is applied to said first surface of said sheet to prevent said second substance from saturating said sheet and thereby preventing said first substance from remaining substantially on said first surface of said sheet.

It is a further object of the invention to provide a kraft paper sheet used in manufacturing an end product, comprising a first surface coated with a first substance providing characteristics desirable in said manufacturing process, and a second surface coated with a second substance providing characteristics desirable in said end product.

It is a further object of the invention to provide a kraft paper sheet wherein said first substance is a lubricant, a wetting agent, a drying agent, and a release agent.

It is a further object of the invention to provide a kraft paper sheet wherein said first substance is a release agent.

It is a further object of the invention to provide a kraft paper sheet wherein said second substance is phenolic resin.

It is a further object of the invention to provide a kraft paper sheet wherein said second substance is melamine formaldehyde, a PVA, an acrylic, a polyester, and a water based thermosetting resin.

It is a further object of the invention to provide a kraft paper sheet wherein said kraft paper sheet is positioned adjacent to at least a second kraft paper sheet with said second surface of said kraft paper sheet in contact with said second kraft paper sheet forming a first laminate assembly, wherein said first laminate assembly is positioned adjacent to a second laminate assembly such that said first surface of said kraft paper sheet is adjacent to a first substance coated surface of said second laminate assembly, and wherein said first and second laminate assembly combination is exposed to high pressure and the treated first laminate assembly is separable from the treated second laminate assembly.

It is a further object of the invention to provide a kraft paper sheet wherein said kraft paper sheet is applied to a decorative layer or a'backer layer.

It is a further object of the invention to provide a kraft paper sheet wherein said kraft paper sheet provides release properties to a laminate assembly during a manufacturing process of a laminate.

It is a further object of the invention to provide a kraft paper sheet wherein said kraft paper sheet has been coated with a predetermined amount of release agent to provide said release properties.

It is a further object of the invention to provide a kraft paper sheet wherein said first substance stays substantially on said first surface of said kraft paper sheet.

It is a further object of the invention to provide a kraft paper sheet wherein said second substance penetrates said kraft paper sheet up to a desired level.

| **The following chart shows a conversion of the units included in the present application into SI units** | | | |
|---|---|---|---|
| **From** | **PSI** | **into** | **bars** |
| 1 | PSI = | 0.06895 | bar |
| 0.25 | PSI = | 0.01724 | bar |
| 5 | PSI = | 0.34475 | bar |
| 0 | PSI = | 0 | bar |
| 100 | PSI = | 6.895 | bars |

| **From** | **ft/min** | **into** | **centimeters/sec** |
|---|---|---|---|
| 1 | ft/min = | 0.508 | cm/sec |
| 5 | ft/min = | 2.54 | cm/sec |
| 300 | ft/min = | 152.40 | cm/sec |

| **From** | **grams/sq foot** | **into** | **grams/sq meter** |
|---|---|---|---|
| 1 | gram/sq foot = | 10.76 | grams/sq meter |
| 0.5 | grams/sq foot = | 5.38 | grams/sq meter |
| 5 | grams/sq foot = | 53.80 | grams/sq meter |
| 20 | grams/sq foot = | 215.20 | grams/sq meter |

| **From** | **inches** | **into** | **centimeters** |
|---|---|---|---|
| 1 | inch = | 2.54 | cm |
| 0.035 | inches = | 0.0889 | cm |
| 0.118 | inches = | 0.29972 | cm |

| **From** | **grooves/inch** | **into** | **grooves/cm** |
|---|---|---|---|
| 1 | groove/inch = | 0.3937 | grooves/cm |
| 9 | grooves/inch = | 3.5433 | grooves/cm |
| 28 | grooves/inch = | 11.0236 | grooves/cm |

| **From** | **degrees Farenheit** | **into** | **degrees Celsius** |
|---|---|---|---|
| 250 | degrees Farenheit = | 121.11 | degrees Celsius |
| 350 | degrees Farenheit = | 176.67 | degrees Celsius |

## Claims

1. A method for manufacturing laminates comprising the steps of:
providing a first laminate assembly, said laminate assembly comprising an outermost layer, said outermost layer comprising a first release sheet, said first release sheet having a first surface (30, 201) coated with a first substance (211) comprising a release agent, said first release sheet having a second surface (30, 201) coated with a second substance (214) comprising a bonding agent, said second surface facing an inner layer of said first laminate assembly;
said method being **characterized in that** it further includes the steps of:
providing a second laminate assembly, said second laminate assembly comprising an outermost layer, said outermost layer comprising a second release sheet, said second release sheet having a first surface (30, 201) coated with a first substance (211) comprising a release agent, said second release sheet having a second surface (30, 201) coated with a second substance (214) comprising a bonding agent, said second surface facing an inner layer of said second laminate assembly;
positioning said first and second laminate assemblies back to back to each other such that said first surfaces of said first and second release sheets oppose each other;
curing said pair of laminate assemblies under high pressure and heat; and
separating the first surfaces of the first and second release sheets of the pair of cured laminate assemblies from each other, said first and second release sheets each being prepared by the two following steps in any order:
(1) coating the first surface (30, 201) of each release sheet with the first substance (211); and
(2) coating the second surface (30, 201) of each release sheet with the second substance (214) wherein said first substance is disposed substantially on said first surface of said release sheet, and
wherein during curing, said second surface of each release sheet bonds to the inner layer of its respective laminate assembly and each said release sheet becomes a constituent layer of its respective cured laminate assembly.

2. The method of claim 1, wherein each said release sheet is further prepared by:
passing each said release sheet along a plurality of rollers (202, 203, 204, 205, 206, 207, 208, 209, 217) at least one of which is adapted to maintain a uniform tension on each said sheet; and
controlling a speed of at least one of said plurality of rollers to effect an amount of said first and second substances to be applied to said first and second surfaces of each said sheet.

3. The method of claims 1 or 2, wherein each said release sheet is further prepared by:
controlling the amount of said first substance that is applied to said first surface of each said sheet by positioning an engagement mechanism (217) to provide a desired bias on each said sheet such that each said sheet engages a first coating roller (207) with a selected amount of pressure.

4. The method of any preceding claim, wherein each said release sheet is further prepared by:
removing from said first surface of each said sheet an amount of said first substance that is in excess of a determined amount.

5. The method of any preceding claim, wherein each said release sheet is further prepared by:
applying air pressure at a predetermined angle to said first surface of each said sheet to maintain said first substance substantially on said first surface of each said sheet.

6. The method of any preceding claim, wherein each said release sheet is further prepared by:
applying pressure on said second surface of each said sheet to achieve a desired level of penetration of each said sheet by said second substance.

7. The method of any preceding claim, wherein each said release sheet is further prepared by:
removing from said second surface of each said sheet an amount of said second substance to maintain a desired level of penetration of each said sheet by said second substance.

8. The method of claim 7, wherein each said release sheet is further prepared by:
providing a metering device (40) with a plurality of grooves of predetermined spacing to remove from said second surface of each said sheet said amount of said second substance.

9. The method of any preceding claim, wherein each said release sheet is further prepared by:
curing said first substance by providing a first conditioning attribute, for curing said first substance to maintain said first substance substantially on said first surface of each said sheet without penetrating each said sheet and curing said second substance by providing a second conditioning attribute, for curing said second substance to achieve a desired saturation level of each said sheet.

10. The method of claim 9, wherein said first and second conditioning attributes are provided by a curing device.

11. The method of claim 9, wherein each said release sheet is further prepared by:
curing said first and second substances by a curing device, wherein said curing device provides a third conditioning attribute selected to substantially achieve said maintaining of said first substance substantially on said first surface and said desired saturation level of said second substance.

12. The method of any preceding claim, wherein each said sheet is a kraft paper sheet.

13. The method of any preceding claim, wherein said release agent has release and crosslink avoiding property.

14. The method of any preceding claim, wherein said release agent is a fatty acid, a fatty acid salt, an amine, an amide or an ester.

15. The method of any of claims 1 to 13, wherein said release agent is sodium alginate.

16. The method of any preceding claim, wherein said second substance comprises phenolic resin.

17. The method of any of claims 1 to 15, wherein said second substance comprises melamine formaldehyde, a PVA, an acrylic, a polyester, or a water based thermosetting resin.

18. The method of any preceding claim, wherein each said release sheet is further prepared by:
controlling precisely the application of said first and second substances on said first and second surfaces of each said sheet to maintain said first substance substantially on said first surface.

19. The method of any of claims 1 to 17, wherein said release sheet is further prepared by:
controlling precisely the application of said first and second substances on said first and second surfaces of each said sheet to allow said second substance to penetrate up to a desired level in each said sheet.

20. The method of any of claims 1 to 17, wherein each said release sheet is further prepared by:
controlling precisely the application of said first and second substances on said first and second surfaces of each said sheet to saturate each said sheet with said second substance up to a desired level.

21. The method of claim 1, wherein each said release sheet is further prepared by:
engaging each said release sheet with a first coater to coat said first surface of each said release sheet with a controlled amount of said first substance.

22. The method of claim 21, wherein each said release sheet is further prepared by:
engaging each said release sheet with a first metering device (212) to remove from said first surface an amount of said first substance to leave a desired amount of said first substance on said first surface.

23. The method of claim 1, wherein each said release sheet is further prepared by:
engaging each said release sheet with a second coater (209) to apply a controlled amount of said second substance said second surface of each said release sheet.

24. The method of any of claims 21 to 23, wherein each said release sheet is prepared by:
engaging each said release sheet with a second metering device (216) to remove from said second surface an amount of said second substance determined to provide a desired level of penetration of each said release sheet by said second substance.

25. The method of claim 1, wherein each said release sheet is prepared by:
adjusting a throughput rate of each said release sheet for proper application of said first substance and said second substance to each said release sheet.

26. The method of claim 1, wherein each said release sheet is prepared by:
adjusting said throughput rate of each said release sheet to allow proper conditioning of said release agent and said bonding agent by a conditioning unit.

27. The method of claim 1, wherein each said release sheet is prepared by:
exposing each said release sheet to a conditioning unit to condition said release agent and said bonding agent by providing conditioning attributes suitable for providing both said release agent and said bonding agent with desired attributes.

28. The method of claim 27, wherein said exposing step further comprises the step of:
controlling a first conditioning attribute during said exposure to maintain said release agent substantially on said first surface of each said release sheet.

29. The method of claim 27, wherein said exposing step further comprises the step of:
controlling a second conditioning attribute during said exposure to prevent seepage of said bonding agent onto said first surface of each said release sheet.

30. The method of claim 27, wherein said exposing step further comprises the step of:
controlling a rate at which each said release sheet is exposed to said conditioning unit; and
maintaining a conditioning attribute of said conditioning unit to prevent seepage of said bonding agent onto said first surface of each said release sheet and maintaining said release agent substantially on said first surface of each said release sheet.

31. The method of any of claims 27 to 30, wherein said conditioning unit is an oven, a refrigeration device, a wetting device, or a drying device.

32. The method of any preceding claim, wherein said first substance and said second substance are applied to each said release sheet such that a ratio of said first substance and said second substance is approximately 1:2.

33. The method of any of any preceding claim, wherein said first substance is applied to said first surface before said second substance is applied to said second surface to prevent said second substance from penetrating each said release sheet beyond a desired level.

## Patentansprüche

1. Verfahren zum Herstellen von Laminaten, das die Schritte aufweist:
Bereitstellen einer ersten Laminatanordnung, welche Laminatanordnung eine äußerste Schicht aufweist, wobei die äußerste Schicht ein erstes Freigabeblatt aufweist, welches erste Freigabeblatte eine erste Oberfläche (30, 201) hat, die mit einer ersten Substanz (211) enthaltend ein Freigabemittel beschichtet ist, und welches erste Freigabeblatt eine zweite Oberfläche (30, 201) hat, die mit einer zweiten Substanz (214) enthaltend ein Haftmittel beschichtet ist, und wobei die zweite Oberfläche einer inneren Schicht der ersten Laminatanordnung zugewandt ist;
welches Verfahren **dadurch gekennzeichnet, dass** es weiterhin die Schritte aufweist:
Bereitstellen einer zweiten Laminatanordnung, welche zweite Laminatanordnung eine äußerste Schicht aufweist, welche äußerste Schicht ein zweites Freigabeblatt aufweist, welches zweite Freigabeblatt eine erste Oberfläche (30, 201) hat, die mit einer ersten, ein Freigabemittel aufweisenden Substanz (211) beschichtet ist, welches zweite Freigabeblatt eine zweite Oberfläche (30, 201) hat, die mit einer zweiten, ein Haftmittel aufweisenden Substanz (214) beschichtet ist, welche zweite Oberfläche einer inneren Schicht der zweiten Laminatanordnung zugewandt ist;
Positionieren der ersten und der zweiten Laminatanordnung Rücken an Rücken zueinander, derart, dass die jeweils erste Oberfläche des ersten und des zweiten Freigabeblattes einander gegenüber liegen;
Aushärten des Paares von Laminatanordnungen unter hohem Druck und Wärme; und
Trennen der ersten Oberflächen des ersten und zweiten Freigabeblatts des Paares von gehärteten Laminatanordnungen voneinander, wobei das erste und das zweite Freigabeblatt jeweils durch die folgenden Schritte in jeder Reihenfolge hergestellt sind:
(1) Beschichten der ersten Oberfläche (30, 201) jedes Freigabeblatts mit der ersten Substanz (211); und
(2) Beschichten der zweiten Oberfläche (30, 201) jedes Freigabeblatts mit der zweiten Substanz (214), wobei sich die erste Substanz im wesentlichen auf der ersten Oberfläche des Freigabeblatts befindet, und
wobei während des Aushärtens die zweite Oberfläche jedes Freigabeblatts an der inneren Schicht seiner jeweiligen Laminatanordnung haftet und jedes Freigabeblatt eine Bestandteilsschicht seiner jeweiligen gehärteten Laminatanordnung wird.

2. Verfahren nach Anspruch 1, bei dem jedes Freigabeblatt weiterhin hergestellt ist durch:
Vorbeiführen jedes Freigabeblatts an mehreren Rollen (202, 203, 204, 205, 206, 207, 208, 209, 217), von denen wenigstens eine so ausgebildet ist, dass sie eine gleichförmige Spannung auf jedes Blatt aufrecht erhält; und
Steuern der Geschwindigkeit von zumindest einer der mehreren Rollen, um zu bewirken, dass eine Menge der ersten und der zweiten Substanz auf die erste und die zweite Oberfläche jedes Blattes aufgebracht wird.

3. Verfahren nach Anspruch 1 oder 2, bei dem das Freigabeblatt weiterhin hergestellt wird durch:
Steuern der Menge der ersten Substanz, die auf die erste Oberfläche jedes Blattes aufbracht wird, durch Positionieren eines Eingriffsmechanismus (217), um eine gewünschte Vorspannung auf jedes Blatt derart auszuüben, dass jedes Blatt in Eingriff mit einer ersten Beschichtungsrolle (207) mit einem ausgewählten Druck tritt.

4. Verfahren nach jedem der vorhergehenden Ansprüche, bei dem das Freigabeblatt weiterhin hergestellt wird durch:
Entfernen einer Menge der ersten Substanz, die über einer bestimmten Menge ist, von der ersten Oberfläche jedes Blattes.

5. Verfahren nach einem der vorhergehenden Ansprüche, bei dem jedes Freigabeblatt weiterhin hergestellt wird durch:
Ausüben eines Luftdruckes unter einem vorbestimmten Winkel auf die erste Oberfläche jedes Blattes, um die erste Substanz im wesentlichen auf der ersten Oberfläche jedes Blattes zu halten.

6. Verfahren nach einem der vorhergehenden Ansprüche, bei dem jedes Freigabeblatt weiterhin hergestellt wird durch:
Ausüben eines Druckes auf die zweite Oberfläche jedes Blattes, um einen gewünschten Pegel des Eindringens der zweiten Substanz in jedes Blatt zu erzielen.

7. Verfahren nach einem der vorhergehenden Ansprüche, bei dem jedes Freigabeblatt weiterhin hergestellt wird durch:
Entfernen einer Menge der zweiten Substanz von der zweiten Oberfläche jedes Blattes, um einen gewünschten Pegel des Eindringens der zweiten Substanz in jedes Blatt zu erhalten.

8. Verfahren nach Anspruch 7, bei dem jedes Freigabeblatt weiterhin hergestellt wird durch:
Bereitstellen einer Dosiervorrichtung (40) mit mehreren Nuten im vorbestimmten gegenseitigen Abstand, um die Menge der zweiten Substanz von der zweiten Oberfläche jedes Blattes zu entfernen.

9. Verfahren nach einem der vorhergehenden Ansprüche, bei dem jedes Freigabeblatt weiterhin hergestellt wird durch:
Aushärten der ersten Substanz durch Vorsehen eines ersten Behandlungsattributs, um die erste Substanz auszuhärten für das Verbleiben der ersten Substanz im wesentlichen auf der ersten Oberfläche jedes Blattes ohne Eindringen in jedes Blatt, und Aushärten der zweiten Substanz durch Vorsehen eines zweiten Behandlungsattributs, um die zweite Substanz auszuhärten zur Erzielung eines gewünschten Sättigungspegels jedes Blattes.

10. Verfahren nach Anspruch 9, bei dem das erste und das zweite Behandlungsattribut durch eine Härtungsvorrichtung vorgesehen werden.

11. Verfahren nach Anspruch 9, bei dem jedes Freigabeblatt weiterhin hergestellt wird durch:
Aushärten der ersten und der zweiten Substanz durch eine Härtungsvorrichtung, wobei die Härtungsvorrichtung ein drittes Behandlungsattribut vorsieht, das ausgewählt ist, um im wesentlichen das Erhalten der ersten Substanz im wesentlichen auf der ersten Oberfläche und dem gewünschten Sättigungspegel der zweiten Substanz zu erzielen.

12. Verfahren nach einem der vorhergehenden Ansprüche, bei dem jedes Blatt ein Kraftpapierblatt ist.

13. Verfahren nach einem der vorhergehenden Ansprüche, bei dem das Freigabemittel eine Freigabeund Vernetzungsvermeidungs-Eigenschaft hat.

14. Verfahren nach einem der vorhergehenden Ansprüche, bei dem das Freigabemittel eine Fettsäure, ein Fettsäuresalz, ein Amin, ein Amid oder ein Ester ist.

15. Verfahren nach einem der Ansprüche 1 bis 13, bei dem das Freigabemittel Natriumalginat ist.

16. Verfahren nach einem der vorhergehenden Ansprüche, bei dem die zweite Substanz Phenolharz aufweist.

17. Verfahren nach einem der Ansprüche 1 bis 15, bei dem die zweite Substanz Melaminformaldehyd, einen PVA (Polyvenylalkohol), ein Acryl, ein Polyester oder ein auf Wasser basierendes, wärmehärtbares Harz aufweist.

18. Verfahren nach einem der vorhergehenden Ansprüche, bei dem das Freigabeblatt weiterhin hergestellt wird durch:
genaues Steuern der Aufbringung der ersten und der zweiten Substanz auf die erste und die zweite Oberfläche jedes Blattes, um die erste Substanz im wesentlichen auf der ersten Oberfläche zu behalten.

19. Verfahren nach einem der Ansprüche 1 bis 17, bei dem das Freigabeblatt weiterhin hergestellt wird durch:
genaues Steuern der Aufbringung der ersten und der zweiten Substanz auf die erste und die zweite Oberfläche jedes Blattes, um der zweiten Substanz zu ermöglichen, bis zu einem gewünschten Pegel in jedes Blatt einzudringen.

20. Verfahren nach einem der Ansprüche 1 bis 17, bei dem jedes Freigabeblatt weiterhin hergestellt wird durch:
genaues Steuern der Aufbringung der ersten und der zweiten Substanz auf die erste und die zweite Oberfläche jedes Blattes, um jedes Blatt mit der zweiten Substanz bis zu einem gewünschten Pegel zu sättigen.

21. Verfahren nach Anspruch 1, bei dem jedes Freigabeblatt weiterhin hergestellt wird durch:
in Eingriff bringen jedes Freigabeblatts mit einer ersten Beschichtungsvorrichtung, um die erste Oberfläche jedes Freigabeblatts mit einer kontrollierten Menge der ersten Substanz zu beschichten.

22. Verfahren nach Anspruch 21, bei dem jedes Freigabeblatt weiterhin hergestellt wird durch:
in Eingriff bringen jedes Freigabeblatts mit einer ersten Dosiervorrichtung (212), um von der ersten Oberfläche eine Menge der ersten Substanz zu entfernen, um eine gewünschte Menge der ersten Substanz auf der ersten Oberfläche zu belassen.

23. Verfahren nach Anspruch 1, bei dem jedes Freigabeblatt weiterhin hergestellt wird durch:
in Eingriff bringen jedes Freigabeblatts mit einer zweiten Beschichtungsvorrichtung (209), um eine kontrollierte Menge der zweiten Substanz auf die zweite Oberfläche jedes Freigabeblatts aufzubringen.

24. Verfahren nach einem der Ansprüche 21 bis 23, bei dem jedes Freigabeblatt hergestellt wird durch:
in Eingriff bringen jedes Freigabeblatts mit einer zweiten Dosiervorrichtung (216), um von der zweiten Oberfläche eine Menge der zweiten Substanz zu entfernen, die bestimmt ist, um einen gewünschten Pegel des Einbringens der zweiten Substanz in jedes Freigabeblatt zu erhalten.

25. Verfahren nach Anspruch 1, bei dem jedes Freigabeblatt hergestellt wird durch:
Einstellen einer Durchsatzgeschwindigkeit für jedes Freigabeblatt für die ordnungsgemäße Aufbringung der ersten Substanz und der zweiten Substanz auf jedes Freigabeblatt.

26. Verfahren nach Anspruch 1, bei dem jedes Freigabeblatt hergestellt wird durch:
Einstellen der Durchsatzgeschwindigkeit für jedes Freigabeblatt, um eine ordnungsgemäße Behandlung des Freigabemittels und des Haftmittels durch eine Behandlungseinheit zu ermöglichen.

27. Verfahren nach Anspruch 1, bei dem jedes Freigabeblatt hergestellt wird durch:
jedes Freigabeblatt wird einer Behandlungseinheit ausgesetzt, um das Freigabemittel und das Haftmittel durch Vorsehen von Behandlungsattributen zu konditionieren, die geeignet sind, um sowohl das Freigabemittel als auch das Haftmittel mit gewünschten Attributen zu versehen.

28. Verfahren nach Anspruch 27, bei dem der Schritt des Aussetzens weiterhin den Schritt aufweist:
Steuern eines ersten Behandlungsattributs während des Aussetzens, um das Freigabemittel im wesentlichen auf der ersten Oberfläche jedes Freigabeblatts zu halten.

29. Verfahren nach Anspruch 27, bei dem der Aussetzungsschritt weiterhin den Schritt aufweist:
Steuern eines zweiten Behandlungsattributs während des Aussetzens, um ein Versickern des Haftmittels zu der ersten Oberfläche des Freigabeblatts zu verhindern.

30. Verfahren nach Anspruch 27, bei dem der Aussetzungsschritt weiterhin den Schritt aufweist:
Steuern einer Geschwindigkeit, bei der jedes Freigabeblatt der Konditionierungseinheit ausgesetzt wird; und
aufrecht Erhalten eines Behandlungsattributs der Konditionierungseinheit, um ein Versickern des Haftmittels zu der ersten Oberfläche jedes Freigabeblatts zu verhindern und Erhalten des Freigabemittels im wesentlichen auf der ersten Oberfläche jedes Freigabeblatts.

31. Verfahren nach einem der Ansprüche 27 bis 30, bei dem die Konditionierungseinheit ein Ofen, eine Kühlvorrichtung, eine Benässungsvorrichtung oder eine Trocknungsvorrichtung ist.

32. Verfahren nach einem der vorhergehenden Ansprüche, bei dem die erste Substanz und die zweite Substanz derart auf jedes Freigabeblatt aufgebracht werden, dass das Verhältnis der ersten Substanz zu der zweiten Substanz angenähert 1:1 ist.

33. Verfahren nach einem der vorhergehenden Ansprüche, bei dem die erste Substanz auf die erste Oberfläche aufgebracht wird, bevor die zweite Substanz auf die zweite Oberfläche aufgebracht wird, um zu verhindern, dass die zweite Substanz über einen gewünschten Pegel hinaus in jedes Freigabeblatt eindringt.

## Revendications

1. Procédé de fabrication de stratifiés comprenant les étapes consistant à :
fournir un premier assemblage stratifié, ledit assemblage stratifié comprenant une couche extérieure, ladite couche extérieure comprenant une première feuille anti-adhérente, ladite feuille anti-adhérente ayant une première surface (30, 201) recouverte d'une première substance (211) comprenant un agent anti-adhérent, ladite première feuille anti-adhérente ayant une deuxième surface (30, 201) recouverte d'une deuxième substance (214) comprenant un agent liant, ladite deuxième surface faisant face à une couche intérieure dudit premier assemblage stratifié ;
ledit procédé étant **caractérisé en ce qu'**il comprend en outre les étapes consistant à :
fournir un deuxième assemblage stratifié, ledit deuxième assemblage stratifié comprenant une couche extérieure, ladite couche extérieure comprenant une deuxième feuille anti-adhérente, ladite deuxième feuille anti-adhérente ayant une première surface (30, 201) recouverte d'une première substance (211) comprenant un agent anti-adhérent, ladite deuxième feuille anti-adhérente ayant une deuxième surface (30, 201) recouverte d'une deuxième substance (214) comprenant un agent liant, ladite deuxième surface faisant face à une couche intérieure dudit deuxième assemblage stratifié ;
positionner lesdits premier et deuxième assemblages stratifiés dos à dos de sorte que lesdites premières surfaces desdites première et deuxième feuilles anti-adhérentes soient opposées l'une à l'autre ;
traiter ladite paire d'assemblages stratifiés à pression et à température élevées ; et
séparer les première surfaces desdites première et deuxième feuilles anti-adhérentes de la paire d'assemblages stratifiés traités l'une de l'autre, lesdites première et deuxièmes feuilles anti-adhérentes étant chacune préparée selon les deux étapes suivantes dans un ordre quelconque :
(1) recouvrir la première surface (30, 201) de chaque feuille anti-adhérente avec la première substance (211) ; et
(2) recouvrir la deuxième surface (30, 201) de chaque feuille anti-adhérente avec la deuxième substance (211), ladite première substance étant disposée sensiblement sur ladite première surface de ladite première feuille anti-adhérente, et
dans lequel, au cours du traitement, ladite deuxième surface de chaque feuille anti-adhérente se lie à la couche intérieure de son assemblage stratifié respectif et chacune desdites feuilles anti-adhérentes devient une couche constitutive de son assemblage stratifié traité respectif.

2. Procédé selon la revendication 1, dans lequel chacune desdites feuilles anti-adhérentes est préparée en outre en :
faisant passer chacune desdites feuilles anti-adhérentes le long d'une pluralité de rouleaux (202, 203, 204, 205, 206, 207, 208, 209, 217) l'un au moins d'entre eux étant apte à maintenir une tension uniforme sur chacune desdites feuilles ; et
contrôlant une vitesse d'au moins un rouleau de ladite pluralité de rouleaux pour qu'une quantité desdites première et deuxième substances soit appliquée sur lesdites première et deuxième surfaces de chaque feuille.

3. Procédé selon les revendications 1 ou 2, dans lequel chacune desdites feuilles anti-adhérentes est préparée en outre en :
contrôlant la quantité de ladite première substance qui est appliquée sur ladite première surface de chacune desdites feuilles en positionnant un mécanisme de mise en contact (217) pour engendrer une tension désirée sur chacune desdites feuilles de sorte que chacune desdites feuilles vient en contact avec un premier rouleau applicateur (207) avec une pression sélectionnée.

4. Procédé selon l'une quelconque des revendications précédentes, dans lequel chacune desdites feuilles anti-adhérentes est préparée en outre en :
en enlevant de ladite première surface de chacune desdites feuilles une quantité de ladite première substance en excès d'une quantité déterminée.

5. Procédé selon l'une quelconque des revendications précédentes, dans lequel chacune desdites feuilles anti-adhérentes est préparée en outre en :
appliquant une pression d'air selon un angle prédéterminé sur ladite première surface de chacune desdites feuilles pour maintenir ladite première substance sensiblement sur ladite première surface de chacune desdites feuilles.

6. Procédé selon l'une quelconque des revendications précédentes, dans lequel chacune desdites feuilles anti-adhérentes est préparée en outre en :
appliquant une pression sur ladite deuxième surface de chacune desdites feuilles pour réaliser un niveau de pénétration désiré de ladite deuxième substance dans chacune desdites feuilles.

7. Procédé selon l'une quelconque des revendications précédentes, dans lequel chacune desdites feuilles anti-adhérentes est préparée en outre en :
enlevant de ladite deuxième surface de chacune desdites feuilles une quantité de ladite deuxième substance pour maintenir un niveau de pénétration désiré de ladite deuxième substance dans chacune desdites feuilles.

8. Procédé selon la revendication 7, dans lequel chacune desdites feuilles anti-adhérentes est préparée en outre en :
fournissant un dispositif de mesure (40) comprenant une pluralité de rainures espacées de manière prédéterminée pour enlever de ladite deuxième surface de chacune desdites feuilles ladite quantité de ladite deuxième substance.

9. Procédé selon l'une quelconque des revendications précédentes, dans lequel chacune desdites feuilles anti-adhérentes est préparée en outre en :
traitant ladite première substance en fournissant une première caractéristique de conditionnement, pour traiter ladite première substance pour maintenir ladite première substance sensiblement sur ladite première surface de chacune desdites feuilles sans pénétrer chacune desdites feuilles et en traitant ladite deuxième substance en fournissant une deuxième caractéristique de conditionnement, pour traiter ladite deuxième substance pour réaliser un niveau de saturation désiré de chacune desdites feuilles.

10. Procédé selon la revendication 9, dans lequel lesdites première et deuxième caractéristiques de conditionnement sont fournies par un dispositif de traitement.

11. Procédé selon la revendication 9, dans lequel chacune desdites feuilles anti-adhérentes est préparée en outre en :
traitant lesdites première et deuxième substances à l'aide d'un dispositif de traitement, dans lequel ledit dispositif de traitement fournit une troisième caractéristique de conditionnement sélectionnée pour réaliser sensiblement ledit maintien de ladite première substance sensiblement sur ladite première surface et le niveau de saturation désiré de ladite deuxième substance.

12. Procédé selon l'une quelconque des revendications précédentes, dans lequel chacune desdites feuilles est une feuille de papier kraft.

13. Procédé selon l'une quelconque des revendications précédentes, dans lequel ledit agent anti-adhérent présente des propriétés anti-adhérente et d'anti-réticulation.

14. Procédé selon l'une quelconque des revendications précédentes, dans lequel ledit agent anti-adhérent est un acide gras, un sel d'acide gras, une amine, un amide ou un ester.

15. Procédé selon l'une quelconque des revendications 1 à 13, dans lequel ledit agent anti-adhérent est un alginate de sodium.

16. Procédé selon l'une quelconque des revendications précédentes, dans lequel ladite deuxième substance comprend une résine phénolique.

17. Procédé selon l'une quelconque des revendications 1 à 15, dans lequel ladite deuxième substance comprend une résine mélamine formaldéhyde, un acétate de polyvinyle (PVA), une résine acrylique, une résine polyester ou une résine thermodurcissable à base d'eau.

18. Procédé selon l'une quelconque des revendications précédentes, dans lequel chacune desdites feuilles anti-adhérentes est préparée en outre en :
contrôlant précisément l'application desdites première et deuxième substances sur lesdites première et deuxième surfaces de chacune desdites feuilles pour maintenir ladite première substance sensiblement sur ladite première surface.

19. Procédé selon l'une quelconque des revendications 1 à 17, dans lequel chacune desdites feuilles anti-adhérentes est préparée en outre en :
contrôlant précisément l'application desdites première et deuxième substances sur lesdites première et deuxième surfaces de chacune desdites feuilles pour permettre à ladite deuxième substance de pénétrer dans chacune desdites feuilles jusqu'à un niveau désiré.

20. Procédé selon l'une quelconque des revendications 1 à 17, dans lequel chacune desdites feuilles anti-adhérentes est préparée en outre en :
contrôlant précisément l'application desdites première et deuxième substances sur lesdites première et deuxième surfaces de chacune desdites feuilles pour saturer chacune desdites feuilles avec ladite deuxième substance jusqu'à un niveau désiré.

21. Procédé selon la revendication 1 , dans lequel chacune desdites feuilles anti-adhérentes est préparée en outre en :
mettant en contact chacune desdites feuilles anti-adhérentes avec un premier applicateur pour recouvrir ladite première surface de chacune desdites feuilles anti-adhérentes avec une quantité contrôlée de ladite première substance.

22. Procédé selon la revendication 21 , dans lequel chacune desdites feuilles anti-adhérentes est préparée en outre en :
mettant en contact chacune desdites feuilles anti-adhérentes avec un premier dispositif de mesure (212) pour enlever de ladite première surface une quantité de ladite première substance de façon à laisser une quantité désirée de ladite première substance sur ladite première surface.

23. Procédé selon la revendication 1 , dans lequel chacune desdites feuilles anti-adhérentes est préparée en outre en :
mettant en contact chacune desdites feuilles anti-adhérentes avec un deuxième applicateur (209) pour appliquer, sur ladite deuxième surface de chacune desdites feuilles anti-adhérentes, une quantité contrôlée de ladite deuxième substance.

24. Procédé selon l'une quelconque des revendications 21 à 23 , dans lequel chacune desdites feuilles anti-adhérentes est préparée en outre en :
mettant en contact chacune desdites feuilles anti-adhérentes avec un deuxième dispositif de mesure (216) pour enlever de ladite deuxième surface une quantité de ladite deuxième substance de façon à fournir un niveau désiré de pénétration de ladite deuxième substance dans chacune desdites feuilles anti-adhérentes

25. Procédé selon la revendication 1, dans lequel chacune desdites feuilles anti-adhérentes est préparée en outre en :
ajustant le débit de chacune desdites feuilles anti-adhérentes pour permettre une application correcte de ladite première substance et de ladite deuxième substance sur chacune desdites feuilles anti-adhérentes.

26. Procédé selon la revendication 1, dans lequel chacune desdites feuilles anti-adhérentes est préparée en outre en :
ajustant le débit de chacune desdites feuilles anti-adhérentes pour permettre un conditionnement correct dudit agent anti-adhérent et dudit agent liant par une unité de conditionnement.

27. Procédé selon la revendication 1, dans lequel chacune desdites feuilles anti-adhérentes est préparée en outre en :
exposant chacune desdites feuilles anti-adhérentes à une unité de conditionnement pour conditionner ledit agent anti-adhérent et ledit agent liant en fournissant des caractéristiques de conditionnement adaptés pour fournir ledit agent anti-adhérent et ledit agent liant avec les caractéristiques désirées.

28. Procédé selon la revendication 27, dans lequel ladite étape d'exposition comprend en outre l'étape consistant à :
contrôler une première caractéristique de conditionnement pendant ladite exposition pour maintenir ledit agent anti-adhérent sensiblement sur ladite première surface de chacune desdites feuilles anti-adhérentes.

29. Procédé selon la revendication 27, dans lequel ladite étape d'exposition comprend en outre l'étape consistant à:
contrôler une deuxième caractéristique de conditionnement pendant ladite exposition pour prévenir l'écoulement dudit agent liant sur ladite première surface de chacune desdites feuilles anti-adhérentes.

30. Procédé selon la revendication 27, dans lequel ladite étape d'exposition comprend en outre l'étape consistant à :
contrôler la vitesse à laquelle chacune desdites feuilles anti-adhérentes est exposée à ladite unité de conditionnement ; et
maintenir une caractéristique de conditionnement de ladite unité de conditionnement pour prévenir l'écoulement dudit agent liant sur ladite première surface de chacune desdites feuilles anti-adhérentes et à maintenir ledit agent anti-adhérent sensiblement sur ladite première surface de chacune desdites feuilles anti-adhérentes.

31. Procédé selon l'une quelconque des revendications 27 à 30, dans lequel ladite unité de conditionnement est une étuve, un dispositif de réfrigération, un dispositif à humecter, ou un dispositif de séchage.

32. Procédé selon l'une quelconque des revendications précédentes, dans lequel ladite première substance et ladite deuxième substance sont appliquées sur chacune desdites feuilles anti-adhérentes de sorte que le rapport de ladite première substance à ladite deuxième substance est approximativement 1:2.

33. Procédé selon l'une quelconque des revendications précédentes, dans lequel ladite première substance est appliquée sur ladite première surface avant que ladite deuxième surface soit appliquée sur ladite deuxième surface pour prévenir la pénétration de ladite deuxième substance dans chacune desdites feuilles anti-adhérentes au-delà d'un niveau désiré.
